# EUROPEAN PATENT APPLICATION

(11) **EP 1 464 995 A1**
(43) Date of publication of application: **06.10.2004**
(21) Application number: 02788832.0
(22) Date of filing: 13.12.2002
(51) Int. Cl.: G02B 5/30, B32B 27/36

(54) **PREVENTIVE FILM FOR POLARIZING FILM AND PREVENTIVE FILM FOR RELEASABLE POLARIZING FILM, AND POLARIZING PLATE USING THEM**

(30) Priority: 14.12.2001 JP 2001382320
(71) Applicant: Toyo Kohan Co., Ltd., Tokyo 102-8447 (JP)
(72) Inventor: MAIDA, Norimasa, c/o TOYO KOHAN CO., LTD., Kudamatsu-shi, Yamaguchi 744-8611 (JP); FUJII, Koji, c/o TOYO KOHAN CO., LTD., Kudamatsu-shi, Yamaguchi 744-8611 (JP); FUKUI, Go, c/o TOYO KOHAN CO., LTD., Kudamatsu-shi, Yamaguchi 744-8611 (JP)
(74) Representative: VOSSIUS & PARTNER
(86) International application number: PCT/JP2002/013082
(87) International publication number: WO 2003/052470

(57) **Abstract**

A preventive film for a polarizer which comprises a non-oriented three-layer film comprising a polycarbonate film having a glass transition temperature of 100°C or higher and, laminated on both surfaces thereof, a polybutylene terephthalate film: a releasable preventive film for a polarizing film which comprises the three-layer film and, applied on the surface of the polybutylene terephthalate film side, a silicon based releasing agent; and a polarizing plate preventive film for a polarizing film and the releasable preventive film for a polarizing film as uppermost surface layers of a polarizing film containing a polarizer. The preventive film for a polarizing film and the releasable preventive film for a polarizing film exhibit an extremely small double refraction and can be produced at a low cost, and the polarizing plate using these films allows the detection of optical defects with ease.

## Description

### TECHNICAL FIELD

The present invention relates to a preventive film for a polarizing film and a releasable preventive film for a polarizing film suitable for polarizing plates of liquid-crystal display devices or the like, and to a polarizing plate using such preventive films.

### BACKGROUND ART

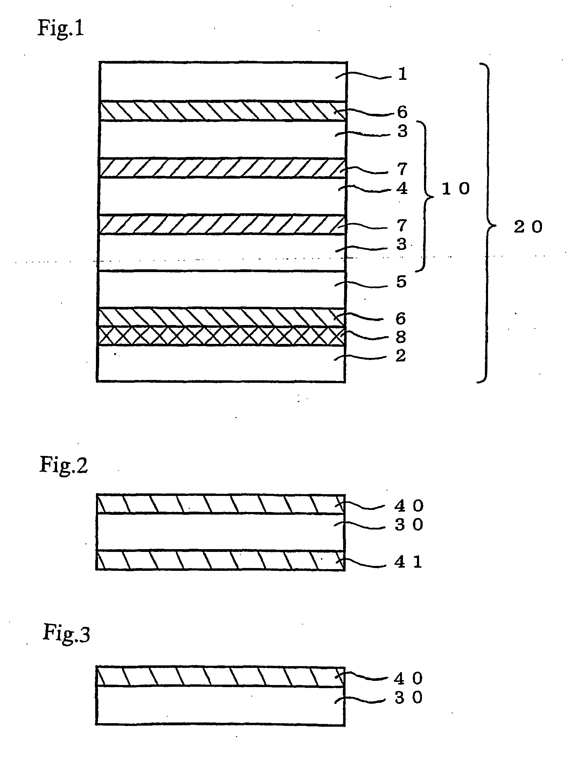

A polarizing plate 20 used by attaching to a liquid-crystal display device or the like, for example, has a configuration shown in FIG. 1. Thus, a polarizing film 10 is composed by attaching preventive films 3 for a polarizer via an adhesive 7 to both surfaces of the polarizer 4 in a sandwiched manner. A preventive film 1 for a polarizing film is attached adhesively via a pressure sensitive adhesive 6 to one side of the polarizing film 10. A phase difference film 5 is attached in contact to the other side of the polarizing film 10, and a releasable preventive film 2 for a polarizing film in which a releasing agent 8 is applied to one surface of the film of the same configuration as the preventive film 1 for a polarizing film is attached adhesively via a pressure sensitive adhesive 6 thereto.

A polarizer obtained by causing adsorption of iodine or a dichroic dye on a film composed of a hydrophilic polymer such as polyvinyl alcohol and orienting the film by stretching is used as the polarizer 4. The following requirements are placed on the preventive film 3 for a polarizer, which maintains endurance and mechanical properties of the polarizer 4: the film has to be optically transparent, that is, should not demonstrate double refraction easily, and also has to have heat resistance, high mechanical strength, a smooth surface, and good adhesion to the adhesive 7 and pressure sensitive adhesive 6, and a film such a triacetyl cellulose can be used as such a film. In order to obtain a clear color and fine image, the phase difference film 5 is required to demonstrate uniform double refraction over the entire surface and have stable optical properties even under severe environmental conditions of high temperature and high humidity. Uniaxially stretched films of polycarbonates have been used therefor.

The preventive film 1 for a polarizing film and the releasable preventive film 2 for a polarizing film are used with the object of preventing the surface of the polarizing film 10 or phase difference film 5 from contamination or scratching in the process of distributing the polarizing film 10 or mounting on a liquid-crystal display device. Those preventing films are attached adhesively to the polarizing film 10 or phase difference film 5 with the pressure sensitive adhesive 6, and it is desired that they can be easily separated in the process of mounting on a liquid-crystal display device. In particular, it is preferred that in the releasable preventive film 2 for a polarizing film, the releasing agent 8 be applied to the surface of adhesive bonding to the pressure sensitive adhesive 8 to facilitate peeling.

Those preventive film 1 for a polarizing film and the releasable preventive film 2 for a polarizing film, similarly to the film for protecting a polarizer, are required to demonstrate no double refraction and to have heat resistance, high mechanical strength, a smooth surface, and good adhesion to the pressure sensitive adhesive 6, and also to have small hygroscopicity, and biaxially stretch oriented polyolefin films or polyester films and thermoplastic norbornene resin films have been used therefor. However, in biaxially stretch oriented polyolefin films or polyester films, nonuniform double refraction occurring in the film was difficult to avoid completely, iridescent interference colors appeared when optical defects such as bright spots and color nonuniformity were detected by inserting the polarizing plate 20 between cross Nicol's prisms and visually observing the transmitted light from the backlight source, the color nonuniformity defects were visible only in the polarizing film 10, and the defective products were very difficult to detect. On the other hand, thermoplastic norbornene resin films have uniform double refraction caused by stretch orientation and can be advantageously used as the preventive film. However, they are much more expensive than the polyolefin films or polyester films and the use thereof is inevitably cost ineffective.

It is an object of the present invention to provide an inexpensive preventive film for a polarizing film and a releasable preventive film for a polarizing film that have an extremely small double refraction, and a polarizing plate using such films in which optical defects can be easily detected.

### DISCLOSURE OF THE INVENTION

A preventive film for a polarizing film in accordance with the present invention is a preventive film for a polarizing film composed of a three-layer film in which polybutylene terephthalate films are laminated on both surfaces of a polycarbonate film, or
a preventive film for a polarizing film composed of a two-layer film in which a polybutylene terephthalate film is laminated on one surface of a polycarbonate film characterized in that
the three-layer film or two-layer film is a non-oriented film, and
the glass transition temperature of the polycarbonate is 100°C or higher.

Further, a releasable preventive film for a polarizing film in accordance with the present invention is a releasable preventive film for a polarizing film in which a releasing agent is applied to one surface of a three-layer film in which polybutylene terephthalate films are laminated on both surfaces of a polycarbonate film, or
a releasable preventive film for a polarizing film in which a releasing agent is applied to a polybutylene terephthalate film surface of a two-layer film in which a polybutylene terephthalate film is laminated on one surface of a polycarbonate film characterized in that
the three-layer film or two-layer film is a non-oriented film,
the releasing agent is a silicon-based releasing agent, and
the glass transition temperature of the polycarbonate is 100°C or higher.

Further, the polarizing plate in accordance with the present invention is a polarizing plate using any of the above-described preventive films for a polarizing film and any of the above-described releasable preventive films for a polarizing film.

### BRIEF DESCRIPTION OF THE DRAWINGS

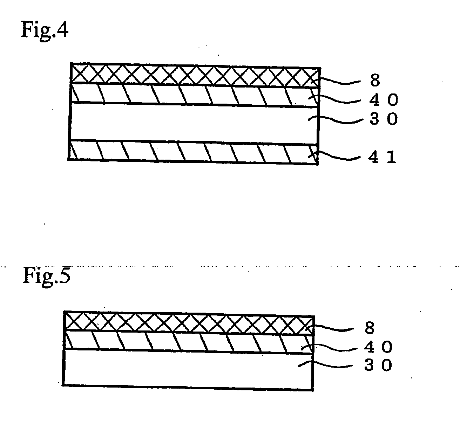

FIG. 1 is a schematic cross-sectional view illustrating an example of the configuration of a polarizing plate. FIG. 2 is a schematic cross-sectional view illustrating an example of the configuration of a preventive film for a polarizing film in accordance with the present invention. FIG. 3 is a schematic cross-sectional view illustrating another example of the configuration of a preventive film for a polarizing film in accordance with the present invention. FIG. 4 is a schematic cross-sectional view illustrating an example of the configuration of a releasable preventive film for a polarizing film in accordance with the present invention. FIG. 5 is a schematic cross-sectional view illustrating another example of the configuration of a releasable preventive film for a polarizing film in accordance with the present invention.

### BEST MODE FOR CARRYING OUT THE INVENTION

In accordance with the present invention, it was established that using a non-oriented three-layer film or two-layer film in which a polybutylene terephthalate film is laminated on two surfaces or one surface of a polycarbonate film with a glass transition temperature of 100°C or higher as a preventive film for a polarizing film, and further applying a silicon-based releasing agent on one surface of the non-oriented three-layer film in which polybutylene terephthalate films are laminated on both surfaces of a polycarbonate film with a glass transition temperature of 100°C or higher or applying a releasing agent on the polybutylene terephthalate film surface of a non-oriented two-layer film in which a polybutylene terephthalate film is laminated on one surface of a polycarbonate film makes it possible to obtain inexpensive films with a very small double refraction, and attaching those films adhesively to a polarizing film makes it possible to obtain a polarizing plate in which optical defects can be easily detected.

The present invention will be described below in greater detail.

A three-layer non-oriented film in which thin-layer polybutylene terephthalate films 40, 41 are laminated on both surfaces of a polycarbonate film 30 serving as a substrate, as shown in FIG. 2, or a two-layer non-oriented film in which a thin-layer polybutylene terephthalate film 40 is laminated on one surface of a polycarbonate film 30 serving as a substrate, as shown in FIG. 3, is used as the preventive film for a polarizing film 1 and the releasable preventive film for a polarizing film in which a film having the same configulation as the preventive film 1, to the one surface of which a releasing agent 8 is applied in accordance with the present invention. The polycarbonate film 30 and polybutylene terephthalate films 40, 41 are colorless and transparent to the naked eye, and because they are non-oriented, they are practically free from double refraction and also optically colorless and produce no adverse effect on detection of optical defects in the polarizing plate 20.

**Table 1.**

| Types of bisphenols | | |
|---|---|---|
| Bisphenol | Polycarbonates | |
| | Melting point (°C) | Glass transition temperature (°C) |
| Bis(4-oxyphenyl)methane (4,4'-dioxydiphenyl methane) | 300 or higher | - |
| 1,1-Bis(4-oxyphenyl)ethane (4,4'-dioxydiphenyl-1,1-ethane) | 185-195 | 130 |
| 1,1-Bis(4-oxyphenyl)butane (4,4'-dioxydiphenyl-1,1-butane) | 150-170 | 123 |
| 1,1-Bis(4-oxyphenyl)isobutane (4,4'-dioxydiphenyl-1,1-isobutane) | 170-180 | 149 |
| 1,1-Bis(4-oxyphenyl)cyclohexane (4,4'-dioxydiphenyl-1,1-cyclohexane) | 250-260 | 171 |
| 2,2-Bis(4-oxyphenyl)propane (4,4'-dioxydiphenyl-2,2-propane) | 220-230 | 149 |
| 2,2-Bis(4-oxyphenyl) butane (4,4'-dioxydiphenyl-2,2- butane) | 205-222 | 130 |

A polarizer obtained by causing adsorption of iodine or a dichroic dye on a film composed of a hydrophilic polymer such as polyvinyl alcohol and then stretching and orienting is used as the polarizer 4. However, because iodine evaporates if thermal fixing is carried out after stretching and orientation, the polarizer is used without thermal fixing. For this reason, it is greatly stretched or contracted by temperature changes or moisture changes in the environment. Therefore, the preventive film 3 for a polarizer which is attached to the polarizer 4 by sandwiching and constricts the deformation caused by temperature changes or moisture changes has to have heat resistance in addition to optical transparency. Furthermore, heat resistance and hygroscopicity are also necessary for the preventive film 1 for a polarizing film or the releasable preventive film 2 for a polarizing film which is adhesively bonded to the outer side thereof. Polycarbonates have excellent heat resistance, low hygroscopicity, and a high mechanical strength, and the glass transition temperature thereof is preferably 100°C or more, even more preferably 150°C or more. If the glass transition temperature is less than 100°C, the constriction force acting on the polarizer 4 is insufficient, and the polycarbonate film itself sometimes shrinks, causing warping of the polarizing plate 20.

Polycarbonates are carbonic acid ester resins derived from bicyclic dihedral phenols and phosgene and feature a high glass transition temperature and heat resistance. Polycarbonates derived from bisphenols, for example, shown in Table 1 can be used as the aforementioned polycarbonates.

Those polycarbonates may be homopolymers, copolymers, or blends, provided that the above-described conditions are satisfied.

A releasable preventive film 2 for a polarizing film is prepared by diluting a releasing agent 8 with an organic solvent and applying or spraying it on one surface of a three-layer non-oriented film having the same configuration as the preventive film 1 for a polarizing film, in which thin-layer polybutylene terephthalate films 40, 41 are laminated on both surfaces of a polycarbonate film 30 serving as a substrate, as shown in FIG. 4, or by diluting a releasing agent 8 with an organic solvent and applying or spraying it on the surface of the polybutylene terephthalate film 40 of the two-layer non-oriented film having the same configuration as the preventive film 1 for a polarizing film, in which a polybutylene terephthalate film 40 is laminated on one surface of a polycarbonate film 30, as shown in FIG. 5. The non-oriented polycarbonate film 30 has poor resistance to organic solvents and shrinks or becomes cloudy and nontransparent when an organic solvent adheres thereto. For this reason, a two-layer film in which the polybutylene terephthalate film 40 is laminated on one surface of the polycarbonate film 30, or a three-layer film in which the polybutylene terephthalate films 40, 41 are laminated on both surfaces of the polycarbonate film 30 is used. The non-oriented polybutylene terephthalate film does not shrink even when an organic solvent adheres thereto and effectively acts as a layer resistant to organic solvents on the polycarbonate film when a releasing agent or a pressure sensitive adhesive is formed on the aforementioned two-layer film or three-layer film by using an organic solvent.

The preventive film 1 for a polarizing film is not necessarily used by applying a releasing agent, as the releasable preventive film 2 for a polarizing film, but because an antistatic agent or a pressure sensitive adhesive is sometimes provided by coating, it is preferred that, similarly to the releasable preventive film 2 for a polarizing film, a three-layer film in which the thin-layer polybutylene terephthalate films 40, 41 having resistance to organic solvents are laminated on both surfaces of the polycarbonate film 30 which has a glass transition temperature of 100°C or higher and serves as a substrate, or a two-layer film in which the polybutylene terephthalate film 40 is laminated on one surface of the polycarbonate film 30 be used.

The thickness of the three-layer film is preferably polybutylene terephthalate (1-10 µm) / polycarbonate (10-80 µm) / polyester polybutylene terephthalate (1-10 µm), and the thickness of the two-layer film is preferably polycarbonate (10-80 µm) / polybutylene terephthalate (1-10 µm). If the thickness of the polycarbonate film 30 is less than 10 µm, the deformation of the preventive film 1 for a polarizing film and a releasable preventive film 2 for a polarizing film caused by heating in the process of applying the releasing agent, antistatic agent, or pressure sensitive adhesive cannot be fully constricted. If the thickness exceeds 80 µm, the constriction effect reaches saturation and the structure becomes cost inefficient. It is preferred that the ratio of the thickness of the polybutylene terephthalate films 40, 41 to that of the polycarbonate film 30 be 1/40 to 1/5. If the ratio is less than 1/40, the polycarbonate cannot be provided with sufficient resistance to organic solvents. Because the glass transition temperature of the polybutylene terephthalate is much lower than that of the polycarbonate, they are easily deformed by temperature changes or moisture changes and if the thickness thereof increases with respect to that to the polycarbonate film 30, then there is a risk of the entire three-layer film or two-layer film being deformed by the deformation of the polarizing film 10 and the polybutylene isophthalate films 40, 41. Therefore, if the thickness of the polybutylene terephthalate films 40, 41 exceeds 1/5, the constriction effect reaches saturation and the structure becomes cost inefficient.

The above-mentioned three-layer film and two-layer film can be fabricated by using a well-known film production method such as a coextrusion method. Furthermore, the three-layer film and two-layer film are manufactured in the form of a long stripe, coiled with a coiler, and coated with a releasing agent or attached adhesively to the substrate film 3 or phase difference film 5, while being uncoiled from a state in which they are coiled with a coiler. Those coiling and uncoiling operations can be conducted smoothly if a lubricating agent such as a silica powder with a particle size of 0.1-3.0 µm is introduced in one or both of the polybutylene terephthalate films 40, 41 in the three-layer film or in one or both of the polycarbonate film 30 and polybutylene terephthalate film 4-0 in the two-layer film. If no lubricating agent is contained, the operation of coiling on a coiler becomes very difficult. If the particle size and content of the lubricating agent are within the aforementioned ranges, no adverse effect is produced on the detection of optical defects in the polarizing plate 20.

Silicon-based releasing agents, higher fatty acids, higher fatty acid amides, higher fatty acid esters, metallic soaps, and fluorocarbons can be used as the releasing agent 8 applied to the releasable preventive film 2 for a polarizing film. Any of them is dissolved or dispersed in an organic solvent such as toluene, ethyl acetate and methyl ethyl ketone, applied or sprayed in the form of a solution or emulsion and then dried. If the releasable preventive film 22 for a polarizing film having the releasing agent 8 is attached adhesively to the phase difference film 5 via the adhesive layer 6, it can be easily peeled off when the film is attached to a liquid-crystal device.

The polarizing plate 20 is composed by using the preventive film 1 for a polarizing film using the non-oriented three-layer film or two-layer film, and the releasable preventive film 2 for a polarizing film having the releasing agent 8 on one surface of the three-layer film or on the polybutylene terephthalate film surface of the two-layer film, which are fabricated in the above-described manner. Thus, a preventive film 1 for a polarizing film is attached adhesively via a pressure sensitive adhesive 6 to one side of the polarizing film 10 in which the preventive films 3 for a polarizer serving as preventive layers are attached by sandwiching to both sides of the polarizer 4, the phase difference film 5 is attached to other side of the polarizing film 10, and the releasable preventive film 2 for a polarizing film that was coated with a releasing agent 8 is attached adhesively to the phase difference film via the pressure sensitive adhesive 6 so that the releasing agent 8 is brought into contact with the pressure sensitive adhesive 6.

### INDUSTRIAL APPLICABILITY

As described hereinabove, the preventive film for a polarizing film in accordance with the present invention which is suitable for polarizing plates of liquid-crystal display devices and the like is composed of a non-oriented three-layer film in which polybutylene terephthalate films are laminated on both surfaces of a polycarbonate film with a glass transition temperature of 100°C or higher or a non-oriented two-layer film in which a polybutylene terephthalate film is laminated on one surface of the polycarbonate film. Similarly, in a releasable preventive film for a polarizing film in accordance with the present invention which is suitable for polarizing plates of liquid-crystal display devices and the like, a silicone-based releasing agent is applied to one surface of a non-oriented three-layer film in which polybutylene terephthalate films are laminated on both surfaces of a polycarbonate film with a glass transition temperature of 100°C or higher or the surface of the polybutylene terephthalate film of a non-oriented two-layer film in which polybutylene terephthalate is laminated on one surface of the polycarbonate film. Those three-layer film or two-layer film are colorless and transparent to the naked eye and because no oriented crystals are present, the films demonstrate practically no double refraction and are optically also colorless. Therefore, when used as preventive films for polarizing plates using polarizers and releasable preventive films for polarizing films, they demonstrate no interference colors and produce no adverse effect on the detection when optical defects of the polarizing plate are detected. Furthermore, because no effect is produced on double refraction of the phase difference film, it is not necessary to use a very expensive thermoplastic norbornene resin film which is used for adjusting double refraction because of good uniformity of double refraction, and the polarizing plate can be manufactured at a low cost.

The thin-layer polybutylene terephthalate film with a thickness of 1/30 to 1/5 that of the polycarbonate film is laminated on both sides of the polycarbonate film serving as a substrate in the three-layer film and on one side of the polycarbonate film in the two-layer film. The polycarbonate has a glass transition temperature of 100°C or higher and high resistance to deformation induced by temperature changes or moisture changes, and attaching the preventive film for a polarizing film or the releasable preventive film for a polarizing film in a sandwiched manner to a polarizing film comprising a polarizer that can be easily deformed by those external factors makes it possible to prevent the polarizing plate comprising the polarizer from deformation induced by the external factors. However, the non-oriented polycarbonate has poor resistance to organic solvents and shrinks or becomes cloudy and nontransparent if an organic solvent adheres thereto. Therefore, a thin-layer polybutylene terephthalate film is laminated as a layer resistant to organic solvents on both surfaces of the polycarbonate film or on one surface to which an organic solvent adheres. The releasable preventive film for a polarizing film is fabricated by applying an organic solvent solution of a silicon-based releasing agent to the polybutylene terephthalate film located on one side of the three-layer film or to the polybutylene terephthalate film of the two-layer film, but because the polycarbonate film is not in direct contact with the organic solvent, the releasable film is neither shrunk nor made cloudy.

Furthermore, in the polarizing plate in accordance with the present invention, a preventive film for a polarizing film in accordance with the present invention is attached adhesively via a pressure sensitive adhesive to one surface of a polarizing film obtained by attaching the preventive films for a polarizer as preventive layers to both surfaces of a polarizer in a sandwiched manner, a phase difference film is attached directly or selectively to the other side of the polarizing film, and a releasable preventive film for a polarizing film in accordance with the present invention having a releasing agent applied thereto is attached adhesively via a pressure sensitive adhesive to the phase difference film so that the releasing agent is in contact with the pressure sensitive adhesive. Thus, the polarizing plate in accordance with the present invention comprises the preventive film for a polarizing film and the releasable preventive film for a polarizing film in accordance with the present invention on the outermost surface thereof. Therefore, contamination or scratching of the surface of the polarizing film and phase difference film are prevented, no adverse effect is produced on the detection of optical defects of the polarizing plate, as described hereinabove, and detection of defective products can be carried out in a very easy manner. Furthermore, it is not necessary to use a very expensive thermoplastic norbornene resin film and the production cost can be reduced. Moreover, because the releasable preventive film for a polarizer is attached adhesively to the phase difference film via a pressure sensitive adhesive, it can be easily peeled off after a delivery process or after mounting on a liquid-crystal device.

## Claims

1. A preventive film for a polarizing film, composed of a three-layer film in which polybutylene terephthalate films are laminated on both surfaces of a polycarbonate film.

2. The preventive film for a polarizing film according to claim 1, wherein said three-layer film is a non-oriented film.

3. A preventive film for a polarizing film, composed of a two-layer film in which a polybutylene terephthalate film is laminated on one surface of a polycarbonate film.

4. The preventive film for a polarizing film according to claim 3, wherein said two-layer film is a non-oriented film.

5. The preventive film for a polarizing film according to claim 1 or 3, wherein the glass transition temperature of the polycarbonate is 100°C or higher.

6. A releasable preventive film for a polarizing film in which a releasing agent is applied to one surface of a three-layer film in which polybutylene terephthalate films are laminated on both surfaces of a polycarbonate film.

7. The releasable preventive film for a polarizing film according to claim 6, wherein said three-layer film is a non-oriented film.

8. A releasable preventive film for a polarizing film in which a releasing agent is applied to a polybutylene terephthalate film surface of a two-layer film in which the polybutylene terephthalate film is laminated on one surface of a polycarbonate film.

9. The releasable preventive film for a polarizing film according to claim 9, wherein said two-layer film is a non-oriented film.

10. The releasable preventive film for a polarizing film according to claim 6 or 8, wherein the releasing agent is a silicone-based releasing agent.

11. The releasable preventive film for a polarizing film according to claim 6 or 8, wherein the glass transition temperature of the polycarbonate is 100°C or higher.

12. A polarizing film using the preventive film for a polarizing film described in any of claims 1 to 5 and the releasable preventive film for a polarizing film described in any of claims 6 to 11.
